# EUROPEAN PATENT SPECIFICATION

(11) **EP 1 430 277 B1**
(45) Date of publication and mention of the grant of the patent: **19.10.2005**
(21) Application number: 02774538.9
(22) Date of filing: 28.08.2002
(51) Int. Cl.: G01G 19/414, B60R 21/01

(54) **METHOD FOR THE DETERMINATION OF PARAMETERS OF A SEAT PASSENGER**
VERFAHREN ZUR BESTIMMUNG VON PARAMETERN EINES SITZPASSAGIERS
PROCEDE DE DETERMINATION DES PARAMETRES D'UN SIEGE DE PASSAGERS

(30) Priority: 06.09.2001 LU 90825
(43) Date of publication of application: 23.06.2004
(73) Proprietor: IEE INTERNATIONAL ELECTRONICS & ENGINEERING S.A., 6468 Echternach (LU)
(72) Inventor: THEISS, Christian, B-4780 Sankt Vith (Recht) (BE); SCHIFFLERS, Marc, B-4710 Lontzen (BE); DI MARIO COLA, Patrick, F-57650 Fontoy (FR)
(74) Representative: Beissel, Jean
(86) International application number: PCT/EP2002/009586
(87) International publication number: WO 2003/023335

(56) References cited:
- EP-A- 0 971 242
- WO-A-01/18506
- WO-A-01/85497
- WO-A-99/38731
- US-A- 5 482 314
- US-A- 5 528 698
- US-A- 5 890 085
- US-A- 6 012 007
- US-B1- 6 272 411
- BILLEN K: "Occupant Classification System for Smart Restraint Systems" SAE PAPER 1999-01-0761, XX, XX, January 1999 (1999-01), pages 33-38, XP002184965

## Description

The present invention relates to a combination of a pneumatic tyre and a rim to assemble the pneumatic tyre to and a producing method thereof, capable of suppressing disturbance of the carcass cord arrangement generated when a green tyre is vulcanised and formed, and improving the uniformity.

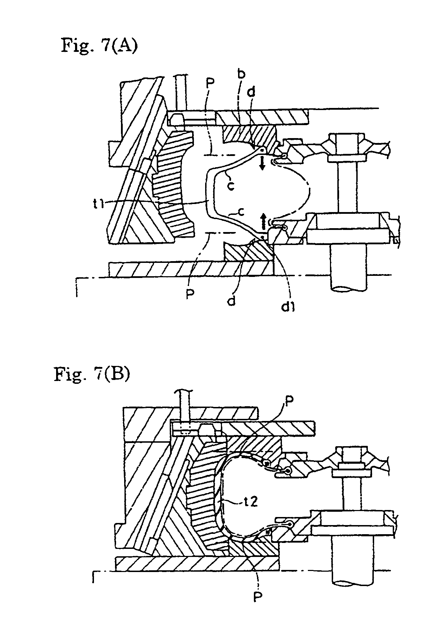

Normally, when a pneumatic tyre is produced, a green tyre (t1) made on a forming drum, is vulcanised and formed in a tyre vulcanising mould (b), thereby making a finished tyre (t2) having final a shape very close to the tyre outline shape when assembled onto a rim as shown in Figs. 7(A) and 7(B).

In the green tyre (t1), sidewall portions (c) and bead portions (d) spread outwards in the axial direction of the tyre as the sidewalls extend radially inwards. Therefore, when the green tyre (t1) is (t1) is vulcanised and formed, the bead cores (dl) are moved axially inwards beyond the sidewall maximum width positions (p) of the finished tyre (t2).

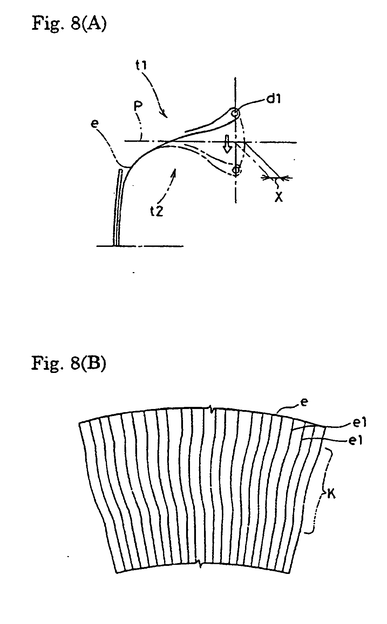

At that time, as shown in Fig. 8(A), a compression force (x) which becomes greatest when the bead cores (dl) pass through the sidewall maximum width positions (p) is temporarily applied to the carcass (e). As a result, as shown in Fig. 8(B), a disturbance of the cord arrangement such as a meander (k) is generated in the carcass cords (e1), and this is a cause of deterioration in the uniformity which results in increased tyre noise and lowering of the steering stability of the vehicle.

If Wc is designated as the difference between the axial distance Wa of the tyre inner peripheral surface and the distance Wb of the bead portion inner surface, both from the tyre centreline, and h is the height of the tyre cross-section then a bead offset ratio can be set as Wc/h. In the prior art Japanese Patent Application Laid Open No H06-228104 this was set at 0.2 or smaller whereas in normal tyres it is typically 0.5.

However, although the distance between the beads is increased and the offset ratio Wc/h of 0.5 is reduced in this prior art, since the difference Wc exists, a portion (g) exists which bend backwards so at least the tyre inner surface is inclined inwards in the axial direction of the tyre toward the radially inner direction. Thus, since the compressing force is still naturally applied, there is still disturbance of the carcass cord arrangement such as meander.

FR 2 699 121 discloses a tyre, a mounting rim therefore and a circumferentially unstretchable ring for supporting the tread of the tyre when running at low or zero pressure. The inner surface of the tyre in a tyre meridian cross-section has a substantially spread form and remains in this form when mounted on the rim. The tyre mounted on the rim does thus not present a conventional form.

It is an object of the present invention to provide a combination of a pneumatic tyre and a rim to assemble the pneumatic tyre to and a producing method thereof, capable of improving the uniformity, reducing the noise and improving the steering stability according to the above problems.

This object is achieved by a combination of a pneumatic tyre and a rim to assemble the pneumatic tyre to according to claim 1 and a producing method for a pneumatic tyre according to claim 2.

A tyre vulcanising mould used for the method according to claim 2 comprises a tyre forming surface having a substantially spread shape inwardly in the tyre's radial direction in its region from a tread forming surface portion forming an outer surface of a tread portion to a bead forming surface portion forming an outer surface of a bead portion through a sidewall forming surface portion forming an outer surface of a sidewall portion, and said tyre forming surface has a maximum width at a bead heel corresponding portion for forming a bead heel.

The tyre vulcanising mould may have an angle α which is 85 degrees or smaller, where said angle α is defined between a tyre axial direction line and a line segment extending from said bead heel corresponding portion through a position of intermediate height of a curved surface of a minimum radius between said tread forming surface portion and said sidewall forming surface portion.

As a result of the present invention, it is possible to reliably prevent the disturbance of the carcass cord arrangement at the time of the vulcanising and final forming process, to improve the uniformity, to reduce noise in service and to improve the steering stability on a vehicle.

These objects as well as other objects, features and advantages of the present invention will become more apparent to those skilled in the art from the following description with reference to the accompanying drawings in which:
Fig. 1 is a sectional view of a tyre of an embodiment of the present invention;
Fig. 2 is a sectional view showing a state in which the tyre is assembled on a rim;
Figs. 3(A) and 3(B) are diagrams for explaining a forming method for a green tyre;
Fig. 4 is a sectional view of a vulcanising mould of the embodiment of the invention;
Fig. 5 is a diagram showing a tyre forming surface of the vulcanising mould at an enlarged scale;
Fig. 6 is a sectional view for explaining one of the problems of a conventional tyre;
Figs. 7 (A) and 7(B) are sectional views for explaining the producing method of the conventional tyre;
Figs. 8(A) and 8(B) are diagrams for explaining the main problem of the conventional tyre; and

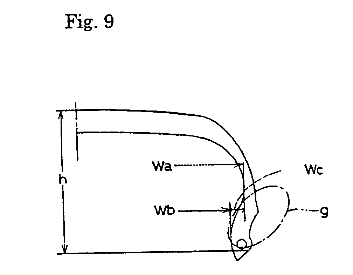

Fig. 9 is a sectional view of the conventional tyre for explaining one of the prior arts.

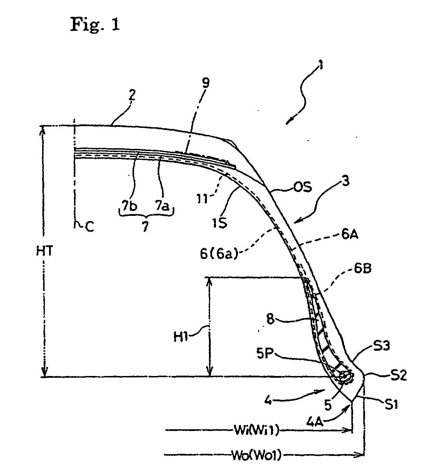

Fig. 1 is a meridian cross-sectional view of a pneumatic tyre 1 after being vulcanised and formed. In Fig. 1, the pneumatic tyre 1 is a radial tyre for a passenger car, and includes a tread portion 2, a pair of sidewall portions 3 extending from opposite ends of the tread portion 2 in a radially inward direction of the tyre, and bead portions 4 located at the inner ends of the sidewall portions 3. A carcass 6 is provided between the bead portions 4, 4 of the pneumatic tyre 1, and the tread portion 2 is reinforced by a belt layer 7 disposed outside the carcass 6 and inside of the tread portion 2.

The belt layer 7 comprises two or more (two, in the present embodiment) belt plies 7a, 7b whose belt cords are disposed at 30° or less with respect to the tyre equator C, and the belt cords are superposed such that they intersect each other between the plies. Steel cord is preferable as the belt cord, but the belt cord may be an organic fibre cord such as nylon, polyester, rayon and aromatic polyamide.

The belt layer 7 has at its outer side with a band layer 9 for preventing lifting of the belt layer 7. The band layer 9 comprises a continuous ply formed by helically winding an organic fibre cord such as nylon substantially parallel to the tyre equator C, and the band layer 9 is formed such as to cover at least an outer edge portion of the belt layer 7.

The carcass 6 is formed of one or more carcass plies 6a having a ply body 6A extending from the tread portion 2 to the bead portion 4 through the sidewall portion 3 and reaching a bead core 5, and a ply turn-up portion 6B continuously formed with the ply body 6A and folded back from the inner side of the tyre around the bead core 5.

The carcass ply 6a includes carcass cords disposed at 70 to 90° with respect to the tyre equator C. An organic fibre cord such as nylon, polyester, rayon and aromatic polyamide, or a metal fibre cord such as steel is employed as the carcass cord. In the case of the present embodiment, one carcass ply 6a is used comprising an organic fibre cord disposed at substantially 90° with respect to the tyre equator C.

A bead apex rubber 8 extending from the bead core 5 outwardly in the tyre radial direction is disposed between the ply body 6A and the ply turn-up portion 6B. An inner surface and an outer surface of the bead apex rubber 8 in the tyre axial direction contact the ply body 6A and the ply folding portion 6B respectively and or extend substantially parallel to the ply body 6A and the ply folding portion 6B as a reinforcing layer. In order to obtain the necessary rigidity of the bead, it is preferable that the bead apex rubber 8 has a height H1 from a cross-section centre 5P of the bead core 5 which is 30% or more of a tyre height HT at the cross-section centre 5P, and is made of a hard rubber having a JIS A hardness of 60 to 90 degrees.

For the bead core 5, there is employed a core capable of rotating around its own circumferential centre line. In other words, the cross-section of the core has substantially symmetrical shape around its cross-section centre point 5P, i.e., a core having a structure which does not have directivity around the cross-section centre point 5P in terms of strength. For such a core, it is possible to employ various structures of circularly cross-section such as a so-called bunched type in which a large number of filaments are bound together, and a so-called cable type formed with a sheath layer comprising a plurality of sheath wires helically wound around the periphery of the core in the manner a cable.

Inside the carcass 6, an inner liner layer 11 forming a tyre inner barrel, i.e., a tyre inner surface IS is provided between the bead portions 4, 4 along the ply body 6A.

The tyre inner surface IS is in a substantially spread form inward in the radial direction in its region from the tread portion 2 to the toe tip ends 4A of the bead portions 4 through the sidewall portions 3.

The expression "substantially spread form" used in the present application means a shape of an outward inclining state in which the tyre inner surface IS extends substantially obliquely outwards in the tyre axial direction towards the radially inner direction. In such a "substantially spread form", the tyre width Wi between the tyre inner surfaces IS gradually increases in the radially inward direction to form a maximum width Wi1 between the toe tip ends 4A and 4A.

In the pneumatic tyre 1, since the inner liner rubber layer 11 has a substantially constant thickness, the tyre inner surface IS is substantially parallel to the ply body 6A of the carcass 6 and the inner surface of the bead apex rubber 8. Therefore, the inner surfaces of the ply body 6A and the bead apex rubber 8 are also in the substantially spread form.

The toe tip end 4A corresponds to an inner end of the tyre inner surface IS in the radial direction. The bead portion 4 comprises a bead bottom surface portion S1 extending from the toe tip end 4A for sitting on a wheel rim seat, and a flange contact surface portion S3 connected to an outer side of the bead bottom surface portion S1 through a convex arc bead heel S2.

In the present embodiment, the tyre outer surface OS is also in a substantially spread form in its region from the tread portion 2 to the bead heel S2 of the bead portion 4 through the sidewall portion 3. Therefore, the tyre width Wo between the tyre outer surfaces OS also gradually increases in the radially inward direction to reach a maximum width Wol between the bead heels S2 and S2.

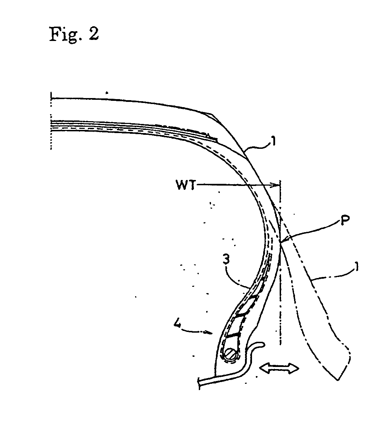

As shown in Fig. 2, when this pneumatic tyre 1 is mounted in its standard rim specified by specifications such as JATMA, TRA or ETRTO, the pneumatic tyre 1 assumes a conventional tyre shape, wherein the tyre maximum width WT is provided at a substantially intermediate portion of the sidewall portion 3, and the bead portion 4 is disposed axially inside the maximum width position P.

As described above, the pneumatic tyre 1 is in the substantially spread form close to the green tyre, which is vulcanised. Therefore, in the vulcanising and formation process, the carcass 6 does not receive compression deformation in the radial direction and so it is possible to reliably and effectively prevent disturbance of the cord arrangement such as meander of the carcass cord due to no compression deformation being generated. It is therefore possible to greatly improve the uniformity and to reduce noise in service and to improve the steering stability on a vehicle.

When the tyre is assembled to its rim, the bead portion 4 is deformed to turn inwards from is maximum width position P. However, since the bead core 5 does not have directivity around the cross-section centre in terms of strength as described above, it is possible to stably secure the rigidity of the bead. To the contrary, internal stress from the bead portion 4 to the sidewall portion 3 is increased due to the deformation and the rigidity is increased, which contribute to the improvement of the steering stability.

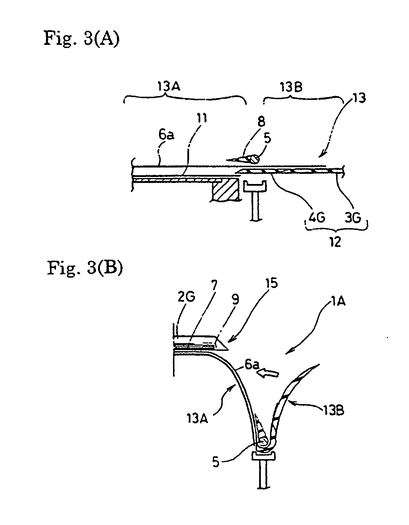

As shown in Figs. 3(A) and 3(B), the tyre assembly process is basically like a conventional tyre. The green tyre 1A is formed such that a tyre covering rubber 12 comprising the inner liner rubber 11, a chafer rubber 4G and sidewall rubber 3G are assemble together on a building drum and the carcass ply 6a and the like are sequentially wound to form a cylindrical base 13 and then, bead cores 5 on which bead apex rubbers 8 are mounted are set to opposite sides of the cylindrical base 13. Then, a main portion 13A of building drum cylindrical base 13 between the bead cores 5 and 5 is expanded to bring the main portion 13A into contact under pressure with an inner peripheral surface of an annular tread ring 15 including a pre-assembled belt layer 7, a band layer 9 and a tread rubber 2G, and the side portions 13B outside the bead core 5 are folded up to contact the main portion 13A, thereby forming the green tyre 1A in its spread form.

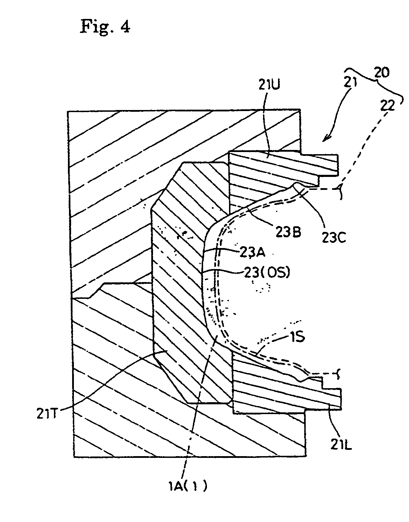

As shown in Fig. 4, the vulcanising mould 20 comprises a mould body 21 having a tyre forming surface 23, and a bladder 22 for pressing the tyre inner surface of a green tyre 1A mounted in the tyre forming surface 23.

In the present embodiment, the vulcanising mould body 21 comprises an upper mould 21U for forming one of the tyre outside surfaces, a lower mould 21L for forming the other tyre outside surface, and a plurality of segments 21T capable of forming the tread surface. By mounting the upper mould 21U and the segments 21T to a ram of a press, and by mounting the lower mould 21L to a bed, the upper mould 21U, the lower mould 21L and the segments 21T can be united together or separated from one another by the vertical movement of the ram. By uniting the upper mould 21U, the lower mould 21L and the segments 21T together, a forming chamber surrounded by the tyre forming surface 23 is formed.

The bladder 22 is a bag-like resilient sheet body formed using rubber, synthetic resin or the like. By charging high temperature and high pressure gas or liquid into the bladder 22, the bladder 22 is expanded, and this presses the green tyre 1A against the tyre forming surface 23. Thus the vulcanising process and the forming process are carried out simultaneously.

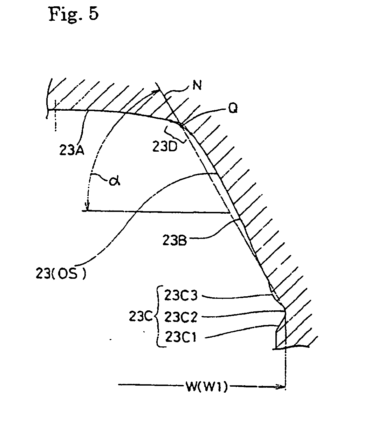

Here, as shown in Fig. 5, the tyre forming surface 23 comprises a tread forming surface portion 23A forming an outer surface of the tread portion 2, a sidewall forming surface portion 23B forming an outer surface of the sidewall portion 3, and a bead forming surface portion 23C forming an outer surface of the bead portion 4. The bead forming surface portion 23C comprises a bottom surface corresponding portion 23C1 forming the bead bottom surface portion S1, a bead heel corresponding portion 23C2 forming the bead heel S2, and a flange contact surface corresponding portion 23C3 forming the flange contact surface portion S3.

The tyre forming surface 23 has substantially the same outline as that of the unvulcanised green tyre outer surface OS. Therefore, the tyre forming surface 23 has a substantially spreading shape in the radially inward direction over a region from the tread forming surface portion 23A to the bead heel corresponding portion 23C2 through the sidewall forming surface portion 23B, and a width W of the tyre forming surface 23 between the bead heel corresponding portions 23C2 and 23C2 is the maximum width W1.

According to the present embodiment, in the tyre forming surface 23, the angle α defined between a tyre axial direction line and a line segment N extending from the bead heel corresponding portion 23C2 through a position Q is set to 85 degrees or smaller. The position Q is the position of intermediate height of a curved surface of a minimum diameter portion 23D between the tread forming surface portion 23A and the sidewall forming surface portion 23B. This angle α is an index of the spreading degree, and by setting this angle at 85 degrees or smaller to increase the spreading degree, the outward projection from the maximum width position P of the bead portion 4 can be set greater and more reliably, and it is then possible to further improve the suppressing effect of the disturbance of the cord arrangement. If the angle α is greater than 85 degrees, the suppressing effect might be insufficient.

In order to obtain the pneumatic tyre 1, in the pressing state by the bladder 22, it is necessary to previously form the tyre inner surface IS of the green tyre 1A such that the tyre inner surface IS substantially spreads radially inward in a region from the tread portion 2 to the two tip end 4A of the bead portion 4 through the sidewall portion 3. This can be carried out by controlling the thickness of each of the constituent members of the tyre.

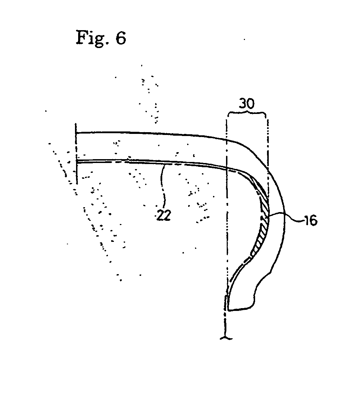

By forming the tyre inner surface IS in the substantially spreading shape, as shown in Fig. 6, it is possible to prevent the bladder 22 from needing on over-hang portion 30 in the tyre axially outward direction for expanding, unlike the conventional tyre. When there is an over-hang portion 30, at the time of vulcanisation, trapped air 16 is prone to be held in a position of the over-hang portion 30 between the green tyre 1A and the bladder 22, and there is a tendency that the tyre shaping precision is lowered and uniformity is deteriorated. Therefore, by forming the pneumatic tyre 1 into the above-mentioned outline, the uniformity can further be enhanced.

The present application is not be limited to a tyre for a passenger car, and can be applied to tyres for various purposes such as a heavy load tyres and small truck tyre, and a bias structure other than the radial structure can also be employed as the carcass.

To show the effectiveness of the invention tyres for a passenger car having a tyre size of 195/65R16 were made based on the specifications shown in Table 1, and the noise and steering stability of the tyres were measured. The tyres were produced by vulcanising and forming substantially the same green tyres, and only the outline shapes at the time of the vulcanisation were different and other specifications were all the same.

### (1) Noise

Road Noise: The sample tyres were mounted on all the wheels of a passenger car (2000 cc) each on a rim (6JJ x 16) and at standard internal pressure (200 kpa). The passenger car was run on a hot rolled road (asphalt road surface) and on a bitumen road (road surface on which chesils are spread) at a speed of 60 km an hour, and the over all (O.A.) and the noise level (dB(A)) at 160Hz were measured by a microphone set at the side of a right ear portion of a driving seat. On the hot rolled road, the noise level at 250 Hz was also measured.

Pass-by Noise: Using the above-mentioned car, the maximum level (dB(A)) of the passing noises at the passing speed of 60- km/h and 80 km/h were measured in accordance with actual coasting test specified by JASO/C/606.

### (2) Steering stability

The above-mentioned car was run on a tyre test course, and the steering wheel response performance, turning performance, wet grip performance and riding comfort degree were evaluated each on a scale of 10 by the driver's sensory evaluation. The result is better as the score is higher.

The weight of the sample tyre, the vertical spring coefficient, the lateral spring coefficient, the cornering power (CP), the cornering force (CF), the self aligning torque power (SATP), the rolling resistance coefficient (RRC), the projection climbing over performance, and resonance frequency of the tyre were measured by laboratory test, and the results are shown in Table 1. The RRC is a value obtained by dividing the rolling resistance value by a load at that time. @1° and @12° in CP, CF and SATP show slip angle.

Concerning the projection climbing over performance, a tyre having a rim (6JJ x 16) and internal pressure (200 kpa) and supported by a fixed shaft was allowed to run on a drum provided with a projection having a height of 5 mm and a width of 25 mm while stepwisely changing the speed from 20 km/h to 100 km/h by 20 km/h each, and the difference of reaction force (kgf), which was applied to the fixed shaft when climbing the above mentioned projection, between the maximum value and the minimum value in the vertical direction and the longitudinal direction and to-and-fro direction at each of the speed was calculated and was compared with the average value. The projection climbing over performance is more excellent as the P-P value is smaller.

The resonance frequency of the tyre was calculated such that a tread centre of a tyre having a rim (6JJ x 16) and internal pressure (200 kpa) therein was vibrated by an impact hammer (input of about 20 kgf), its output is detected by, e.g., a piezoelectric triaxial load cell, and the correlation between these input and output is analysed by a computer, thereby calculating resonance frequency in the circumferential direction and the radial direction which are inherent in a tyre.

Further, the cord shrinkage ratio during the vulcanisation formation (180°C) of the carcass, and the cord pass (cord length) between the bead cores of the carcass cord after the vulcanisation formation were also measured.

**Table 1**

| | Conventional product | Embodiment product |
|---|---|---|
| Bead width W1 <mm> | 131.0 | 256.0 |
| Angle α (degree of spread) <degree> | 97.0 | 63.0 |
| Size after being assembled into rim | | |
| · Outer diameter <mm> | 636.6 | 635.0 |
| · Tyre maximum width WT <mm> | 196.8 | 200.2 |
| · Difference W1-WT <mm> | -65.8 | 55.8 |
| Vertical spring coefficient <kgf/mm> | 19.3 | 19.4 |
| Lateral spring coefficient <kgf/mm> | 10.6 | 11.1 |
| CP @1° <kgf> | 105.3 | 99.9 |
| CF @12° <kgf> | 414.5 | 403.6 |
| SATP @1° <kgf · m> | 3.13 | 2.91 |
| RRC @80 km/h | 111.4 | 112.7 |
| Projection climbing over performance | | |
| · p-p vertical direction <kgf> | 85.2 | 82.5 |
| · p-p to-and-fro direction <kgf> | 93.8 | 88.1 |
| Resonance frequency | | |
| · Circumferential direction | 80.0 | 83.75 |
| · Radial direction | 311.25 | 305.00 |
| Cord shrinkage | 3.4 | 2.6 |
| Cord pass | 384.7 | 381.2 |
| Noise | | |
| (1) Road noise | | |
| · Hot roll 1 | | |
| O.A. | 70.0 | 69.8 |
| 160 Hz | 63.7 | 62.7 |
| · Hot roll 2 | | |
| O.A. | 65.6 | 65.3 |
| 250 Hz | 58.7 | 58.2 |
| · Bitumen road | | |
| O.A. | 69.7 | 69.3 |
| 160 Hz | 63.0 | 61.7 |
| (2) Pass-by noise | | |
| · @ 60 km/h | 67.5 | 67.2 |
| · @ 80 km/h | 71.4 | 71.3 |
| Steering stability | | |
| · Dry responding performance | 6 | 7 |
| · Dry turning performance | 6 | 6 |
| · Wet grip performance | 6 | 6 |
| · Riding comfortable degree | 6 | 6 |

As shown in Table 1, it was confirmed that the cord distribution of the tyre of the embodiment was smaller than that of the conventional product and that wave of the carcass cord is suppressed and the uniformity is improved. Further, it was confirmed that the tyre of the embodiment was excellent in respect of tyre noise and steering stability, especially the steering wheel response performance on a dry road surface.

## Claims

1. Combination of a pneumatic tyre and a rim to assemble the pneumatic tyre to,
the pneumatic tyre comprising a bead core (5) buried in a bead portion (4), and a carcass (6) extending from a tread portion (2) to said bead cores (5) in each said bead portion (4) through a sidewall portion (3), wherein a tyre inner surface (IS) in a tyre meridian cross-section is in a substantially spread form inwardly in the tyre's radial direction in its region from said tread portion (2) to said bead portion (4) through said sidewall portion (3) and extending obliquely outward in the tyre's axial direction toward the radially inner direction so as to increase a tyre width (Wi) between the tyre inner surfaces (IS) gradually inwardly in the tyre's radial direction to form the maximum width (Wi1) between the toe tip ends (4A) of the bead portion (4) when the tyre is not mounted to the rim,
the rim being a standard rim for a conventional tyre shape wherein the maximum width (WT) of the tyre is provided at a substantially intermediate portion of the side wall portion (3) and
the bead portion (4) is deformed such as to turn inward from the outside of a position (P) of the maximum width (WT) in the tire's axial direction when the tyre is assembled to the rim.

2. A producing method for a pneumatic tyre comprising the steps of vulcanising a green tyre (IA) provided at its bead portion (4) with a bead core (5), using a vulcanising mould (20) having a shape in which a tyre inner surface (IS) in a tyre meridian cross-section when said green tyre is mounted and pressurised by a bladder (22) substantially spreads inwards in the tyre's radial direction in its region from a tread portion (2) to a bead portion (4) through a sidewall portion (3) and extends obliquely outward in the tyre's axial direction toward the radially inner direction so as to increase a tyre width (Wi) between the tyre inner surfaces (IS) gradually inwardly in the tyre's radial direction to form the maximum width (Wi1) between the toe tip ends (4A) of the bead portion (4),
**characterized by** the additional step of assembling the tyre to a standard rim for a conventional tyre shape wherein the maximum width (WT) is provided at a substantially intermediate portion of the side wall portion (3) such that when the tyre is assembled to the standard rim, the bead portion (4) is deformed such as to turn inward from the outside of a position (P) of the maximum width (WT) in the tire's axial direction.

## Patentansprüche

1. Kombination aus einem Luftreifen und einer Felge zum Aufziehen des Reifens,
wobei der Luftreifen einen Wulstkern (5), der in einen Wulstabschnitt (4) eingelassen ist, und eine Karkasse (6) umfasst, die sich von einem Laufflächenabschnitt (2) zu den Wulstkernen (5) in einem jeden Wulstabschnitt (4) durch einen Seitenwandabschnitt (3) hindurch erstreckt, wobei eine Innenfläche (IS) des Reifens in einem Reifenmeridianquerschnitt in einer im Wesentlichen gespreizten Form einwärts in der radialen Richtung des Reifens in seinem Bereich von dem Laufflächenabschnitt (2) zu dem Wulstabschnitt (4) durch den Seitenwandabschnitt (3) hindurch vorliegt und sich in der axialen Richtung des Reifens schräg nach außen in der Richtung radial nach innen erstreckt, so dass eine Reifenbreite (Wi) zwischen den Innenflächen (IS) des Reifens einwärts in der radialen Richtung des Reifens allmählich zunimmt, so dass die maximale Breite (Wi1) zwischen den Zehenspitzenenden (4A) des Wulstabschnittes (4) gebildet ist, wenn der Reifen nicht auf die Felge aufgezogen ist,
wobei die Felge eine Standardfelge für eine herkömmliche Reifenform ist, wobei die maximale Breite (WT) des Reifens an einem im Wesentlichen mittleren Abschnitt des Seitenwandabschnittes (3) vorgesehen ist, und
der Wulstabschnitt (4) derart verformt ist, dass er von der Außenseite einer Stelle (P) mit der maximalen Breite (WT) in der axialen Richtung des Reifens nach innen gedreht ist, wenn der Reifen auf die Felge aufgezogen ist.

2. Herstellungsverfahren für einen Luftreifen mit den Schritten, dass ein Rohreifen (IA), der an seinem Wulstabschnitt (4) mit einem Wulstkern (5) versehen ist, unter Verwendung einer Vulkanisierform (20) vulkanisiert wird, die eine Form aufweist, in der eine Innenfläche (IS) eines Reifens im Meridianquerschnitt des Reifens, wenn der Rohreifen montiert und durch einen Heizbalg (22) unter Druck gesetzt wird, sich einwärts in der radialen Richtung des Reifens in seinem Bereich von einem Laufflächenabschnitt (2) zu einem Wulstabschnitt (4) durch einen Seitenwandabschnitt (3) hindurch im Wesentlichen spreizt und sich in der axialen Richtung des Reifens schräg nach außen in der Richtung radial nach innen erstreckt, so dass eine Reifenbreite (Wi) zwischen den Innenflächen (IS) des Reifens einwärts in der radialen Richtung des Reifens allmählich zunimmt, so dass die maximale Breite (Wi1) zwischen den Zehenspitzenenden (4A) des Wulstabschnitts (4) gebildet wird,
**gekennzeichnet durch** den zusätzlichen Schritt, dass der Reifen auf eine Standardfelge für eine herkömmliche Reifenform aufgezogen wird, wobei die maximale Breite (WT) an einem im Wesentlichen mittleren Abschnitt des Seitenwandabschnittes (3) derart vorgesehen wird, dass, wenn der Reifen auf die Standardfelge aufgezogen wird, der Wulstabschnitt (4) derart verformt wird, dass er sich von der Außenseite einer Stelle (P) mit der maximalen Breite (WT) in der axialen Richtung des Reifens nach innen dreht.

## Revendications

1. Combinaison d'un pneumatique et d'une jante sur laquelle doit être assemblé le pneumatique,
le pneumatique comprenant une tringle de talon (5) noyée dans une portion de talon (4), et une carcasse (6) s'étendant depuis une portion formant bande de roulement (2) vers lesdites tringles de talon (5) dans chacune desdites portions de talon (4) à travers une portion de paroi latérale (3), dans laquelle une surface intérieure (IS) du pneumatique, dans une section transversale méridienne du pneumatique, présente une forme sensiblement étalée vers l'intérieur dans la direction radiale du pneumatique dans sa région depuis ladite portion de bande de roulement (2) à ladite portion de talon (4) à travers ladite portion de paroi latérale (3) et s'étendant en oblique vers l'extérieur dans la direction axiale du pneumatique vers la direction radialement intérieure de manière à augmenter la largeur (Wi) du pneumatique entre les surfaces intérieures (IS) du pneumatique, progressivement vers l'intérieur dans la direction radiale du pneumatique pour former la largeur maximum (Wi1) entre les extrémités des talons (4A) de la portion de talon (4) quand le pneumatique n'est pas monté sur la jante, la jante étant une jante standard pour un pneumatique de forme traditionnelle dans lequel la largeur maximum (WT) du pneumatique est prévue à une partie sensiblement intermédiaire de la portion de paroi latérale (3), et
la portion de talon (4) est déformée de manière à tourner vers l'intérieur depuis l'extérieur d'une position (P) de la largeur maximum (WT) dans la direction axiale du pneumatique quand le pneumatique est assemblé sur la jante.

2. Procédé de production pour un pneumatique, comprenant les étapes consistant à vulcaniser une ébauche de pneumatique (IA) pourvue au niveau de sa portion de talon (4) d'une tringle de talon (5), en utilisant un moule de vulcanisation (20) ayant une forme dans laquelle une surface intérieure du pneumatique (IS), dans une section transversale méridienne du pneumatique lorsque ladite ébauche de pneumatique est montée et mise sous pression par un ballon (22), s'étale sensiblement vers l'intérieur dans la direction radiale du pneumatique dans sa région depuis une portion formant bande de roulement (2) à une portion de talon (4) à travers une portion de paroi latérale (3), et s'étend en oblique vers l'extérieur dans la direction axiale du pneumatique vers la direction radialement intérieure de manière à augmenter une largeur (Wi) du pneumatique entre les surfaces intérieures du pneumatique (IS) progressivement vers l'intérieur dans la direction radiale du pneumatique pour former la largeur maximum (Wi1) entre les extrémités de talon (4A) de la portion de talon (4),
**caractérisé par** l'étape additionnelle consistant à assembler le pneumatique sur une jante standard pour un pneumatique de forme traditionnelle dans lequel la largeur maximum (WT) est prévue à une partie sensiblement intermédiaire de la portion de paroi latérale (3) de sorte que lorsque le pneumatique est assemblé sur la jante standard, la portion de talon (4) est déformée de manière à tourner vers l'intérieur depuis l'extérieur d'une position (P) de la largeur maximum (WT) dans la direction axiale du pneumatique.
